# EUROPÄISCHE PATENTSCHRIFT

(11) **EP 0 912 987 B1**
(45) Veröffentlichungstag und Bekanntmachung des Hinweises auf die Patenterteilung: **21.05.2003**
(21) Anmeldenummer: 98928088.8
(22) Anmeldetag: 26.03.1998
(51) Int. Cl.: H01J 5/58

(54) **SOCKELKITT FÜR ELEKTRISCHE LAMPEN**
SOCKET BASE FILLER FOR ELECTRIC LAMPS
MASTIC DE CULOT POUR LAMPES ELECTRIQUES

(30) Priorität: 26.03.1997 DE 19712740
(43) Veröffentlichungstag der Anmeldung: 06.05.1999
(73) Patentinhaber: Patent-Treuhand-Gesellschaft für elektrische Glühlampen mbH, 81543 München (DE)
(72) Erfinder: SCHIRMER, Rainer, D-86842 Türkheim (DE); SCHÖNWETTER, Johann, D-86853 Langerringen (DE); WILHELM, Armin, D-86865 Oberneufnach (DE)
(86) Internationale Anmeldenummer: DE9800900
(87) Internationale Veröffentlichungsnummer: WO98043267

(56) Entgegenhaltungen:
- EP-A- 0 261 722
- DE-A- 4 420 574
- DE-A- 19 626 378
- DE-B- 1 029 097
- GB-A- 349 244
- GB-A- 690 698
- NL-C- 61 108
- PATENT ABSTRACTS OF JAPAN vol. 008, no. 256 (E-280), 22. November 1984 & JP 59 128752 A (KARUPU KOGYO KK), 24. Juli 1984
- PATENT ABSTRACTS OF JAPAN vol. 014, no. 557 (E-1011), 11. Dezember 1990 & JP 02 239540 A (TOSHIBA LIGHTING & TECHNOL CORP), 21. September 1990

## Beschreibung

Die Erfindung betrifft einen Sockelkitt für elektrische Lampen gemäß dem Oberbegriff des Patentanspruches 1.

### I. Stand der Technik

Ein derartiger Sockelkitt ist beispielsweise in der europäischen Patentschrift EP 0 261 722 offenbart. Der in diesem Dokument beschriebene Sockelkitt besteht aus einer Mischung von Naturharzen und synthetischen Harzen, Füllstoffen und Lösungsmitteln sowie weiteren Zusätzen. Als Naturharze werden Schellack und Kolophonium verwendet. Als synthetische Harze werden Silikonharz und Phenolformaldehydharz genannt. Die Füllstoffkomponente besteht aus Kalziumkarbonat und bei dem Lösungsmittel handelt es sich um Ethanol. Außerdem weist dieser Kitt noch einen Zusatz von Hexamethylentetramin auf.

Die Offenlegungsschrift GB 690 698 A beschreibt einen Sockelkitt für elektrische Lampen, der einen aus Phenol- oder Silikonharzen bestehenden synthetischen Harzanteil, einen Naturharzanteil und einen Calcit enthaltenden Füllstoffanteil sowie einen Lösungsmittelanteil aufweist, wobei der synthetische Harzanteil zwischen 5 Gewichtsprozent und 12 Gewichtsprozent und der Naturharzanteil zwischen 2 Gewichtsprozent und 12 Gewichtsprozent liegt.

### II. Darstellung der Erfindung

Es ist die Aufgabe der Erfindung, einen Sockelkitt für elektrische Lampen bereitzustellen, der einen möglichst geringen Harzanteil aufweist, kostengünstig ist und dem Lampensockel eine zufriedenstellende Abdrehfestigkeit verleiht.

Diese Aufgabe wird erfindungsgemäß durch die kennzeichnenden Merkmale des Patentanspruches 1 gelöst. Besonders vorteilhafte Ausführungen der Erfindung sind in den Unteransprüchen beschrieben.

Der geringe Harzanteil wird im wesentlichen durch die auschließliche Verwendung von Calzit in kristalliner Form, der eine vergleichsweise geringe Saugfähigkeit besitzt, als Füllstoff ermöglicht. Als besonders vorteilhaft hat sich die Verwendung von Calcit mit einer Korngröße zwischen 0,1 µm und 700 µm erwiesen, wobei die mittlere Korngröße des Calcites vorteilhafterweise ca. 200 µm beträgt und das Calcit vorteilhafterweise eine mittlere Dichte von 2,7 g/cm³ besitzt. Der Harzanteil des erfindungsgemäßen Sokkelkittes beträgt höchstens 16 Gewichtsprozent. Bei den bevorzugten Ausführungsbeispielen liegt er sogar unterhalb von 13 Gewichtsprozent. Die zufriedenstellende Festigkeit des Sockelkittes, insbesondere eine zufriedenstellende Sockelabdrehfestigkeit bei mit Schraub- und Bajonettsockeln ausgerüsteten Lampen, wird durch die Verwendung einer Mischung aus Naturharzen und synthetischen Harzen ermöglicht, wobei die Naturharzkomponente höchstens 5 Gewichtsprozent und die synthetische Harzkomponente höchstens 11 Gewichtsprozent des Sockelkittes beträgt. Als vorteilhaft hat sich in diesem Zusammenhang ein Verhältnis der Naturharzgewichtsanteile zu den synthetischen Harzgewichtsanteilen zwischen 0,1 und 0,5 und besonders vorteilhaft zwischen 0,12 und 0,4 erwiesen. Der erfindungsgemäße Sockelkitt ist durch den geringen Harzanteil und durch die Kombination von Naturharzen, wie zum Beispiel Schellack und Kolophonium, mit synthetischen Harzen, wie zum Beispiel Phenol- und Silikonharz, auch kostengünstig. Die synthetische Harzkomponente des erfindungsgemäßen Sokkelkittes enthält vorteilhafterweise nur Phenol- und Silikonharze. Der erfindungsgemäße Sockelkitt besteht im Vergleich zum Stand der Technik aus nur wenigen Komponenten.

Nachstehend wird die Erfindung anhand dreier bevorzugter Ausführungsbeispiele näher erläutert.

### III. Beschreibung der bevorzugten Ausführungsbeispiele

Gemäß des besonders bevorzugten ersten Ausführungsbeispiels besteht die synthetische Harzkomponente des erfindungsgemäßen Sockelkittes aus 8,1 Gewichtsprozent Phenolharz mit der Bezeichnung K 0791 der Firma Bakelite und 0,7 Gewichtsprozent Silikonharz mit der Bezeichnung 6-2230 der Firma Dow Corning. Die Naturharzkomponente dieses Sockelkittes besteht aus 2,5 Gewichtsprozent Kolophonium und 0,8 Gewichtsprozent Schellack. Die Füllstoffkomponente wird von 74,8 Gewichtsprozent Calcit mit der Bezeichnung JP/LM von der Firma Merkle GmbH und 8,0 Gewichtsprozent Calcit mit der Bezeichnung Nofacal Z von der Firma Bayerische Farben- und Mineralwerke gebildet. Die Korngröße des kristallinen Calcites liegt zwischen 0,1 µm und 700 µm. Die mittlere Korngröße, das heißt, der sogenannte D50-Wert, des Calcites beträgt ungefähr 200 µm. Die mittlere Dichte des Calcites beträgt 2,7 g/cm³. Als Lösungsmittel werden 1,1 Gewichtsprozent Iso-Butanol und 3,7 Gewichtsprozent Ethanol verwendet. Zusätzlich enthält der Sokkelkitt gemäß des ersten Ausführungsbeispiels der Erfindung noch 0,3 Gewichtsprozent einer 1,8-prozentigen Fuchsinrot-Lösung als Farbstoff. Der synthetische Harzanteil beträgt hier also insgesamt 8,8 Gewichtsprozent und der Naturharzanteil insgesamt 3,3 Gewichtsprozent, so daß sich der gesamte Harzanteil zu 12,1 Gewichtsprozent errechnet. Daraus ergibt sich ein Gewichtsverhältnis von Naturharz zu synthetischem Harz von 0,375.

Beim zweiten Ausführungsbeispiel der Erfindung besteht die synthetische Harzkomponente des Sockelkittes aus 8,5 Gewichtsprozent Phenolharz mit der Bezeichnung K 0791 von der Firma Bakelite und 0,65 Gewichtsprozent Silikonharz mit der Bezeichnung 6-2230 von Dow Corning. Die Naturharzkomponente dieses Sockelkittes besteht aus 2,69 Gewichtsprozent Kolophonium und 0,81 Gewichtsprozent Schellack. Die Füllstoffkomponente wird von 78,7 Gewichtsprozent Calcit mit der Bezeichnung JP/LM von der Firma Merkle GmbH und 8,6 Gewichtsprozent Calcit mit der Bezeichnung Nofacal Z von der Firma Bayerische Farben- und Mineralwerke gebildet. Die Korngröße des kristallinen Calcites liegt zwischen 0,1 µm und 700 µm. Die mittlere Korngröße des Calcites beträgt ungefähr 200 µm. Die mittlere Dichte des Calcites beträgt 2,7 g/cm³. Als Lösungsmittel wird 5,4 Gewichtsprozent Ethanol verwendet. Der synthetische Harzanteil beträgt hier also insgesamt 9,15 Gewichtsprozent und der Naturharzanteil insgesamt 3,5 Gewichtsprozent, so daß sich der gesamte Harzanteil zu 12,65 Gewichtsprozent errechnet. Daraus ergibt sich ein Gewichtsverhältnis von Naturharz zu synthetischem Harz von 0,383.

Beim dritten Ausführungsbeispiel der Erfindung besteht die synthetische Harzkomponente des Sockelkittes aus 9,90 Gewichtsprozent Phenolharz mit der Bezeichnung K 0791 von der Firma Bakelite und 0,62 Gewichtsprozent Silikonharz mit der Bezeichnung 6-2230 von Dow Corning. Die Naturharzkomponente dieses Sockelkittes besteht aus 0,97 Gewichtsprozent Kolophonium und 0,39 Gewichtsprozent Schellack. Die Füllstoffkomponente wird von insgesamt 83,37 Gewichtsprozent Calcit gebildet. Die Korngröße des kristallinen Calcites liegt zwischen 0,1 µm und 700 µm. Die mittlere Korngröße, das heißt, der D50-Wert der Korngröße des Calcites beträgt ungefähr 200 µm. Die mittlere Dichte des Calcites beträgt 2,7 g/cm³. Als Lösungsmittel werden 1,01 Gewichtsprozent Iso-Butanol und 3,74 Gewichtsprozent Ethanol verwendet. Der synthetische Harzanteil beträgt hier also insgesamt 10,52 Gewichtsprozent und der Naturharzanteil insgesamt 1,36 Gewichtsprozent, so daß sich der gesamte Harzanteil zu 11,88 Gewichtsprozent errechnet. Daraus ergibt sich ein Gewichtsverhältnis von Naturharz zu synthetischem Harz von 0,129.

Alle Kittkompositionen gewährleisten bei Verwendung in Lampen mit E27-Schraubsockeln und Bajonettsockeln eine Sockelabdrehfestigkeit von mehr als 10 Nm. Außerdem besitzt die erfindungsgemäße Sockelkittpaste eine Lagerfähigkeit von mindestens 8 Wochen nach Herstellung.

Die Erfindung beschränkt sich nicht auf die oben näher beschriebenen Ausführungsbeispiele. Beispielsweise können als Füllstoffe auch Calzite anderer Lieferanten mit gleichen Qualitätsmerkmalen verwendet werden. Die oben beschriebenen Sockelkittkompositionen können auch als Pulver, ohne Lösungsmittel, hergestellt werden. Die Lösungsmittel werden dann erst beim Anrühren der Kittpaste, unmittelbar vor der Sockelung der Lampen, beigemengt.

## Patentansprüche

1. Sockelkitt für elektrische Lampen, der einen aus Phenol- und/oder Silikonharzen bestehenden synthetischen Harzanteil, einen Naturharzanteil und einen Calcit enthaltenden Füllstoffanteil sowie einen Lösungsmittelanteil aufweist, wobei der synthetische Harzanteil am Sockelkitt höchstens 11 Gewichtsprozent beträgt und der Naturharzanteil am Sockelkitt höchstens 5 Gewichtsprozent beträgt,
**dadurch gekennzeichnet, dass** der Füllstoffanteil ausschließlich aus Calcit in kristalliner Form besteht, wobei die mittlere Korngröße des Füllstoffanteils 200 µm beträgt und die mittlere Dichte des Füllstoffanteils 2,7 g/cm³ beträgt.

2. Sockelkitt nach Anspruch 1, **dadurch gekennzeichnet, daß** das Gewichtsverhältnis von Naturharzanteil zu synthetischem Harzanteil zwischen 0,1 und 0,5 liegt.

3. Sockelkitt nach Anspruch 2, **dadurch gekennzeichnet, daß** das Gewichtsverhältnis von Naturharzanteil zu synthetischem Harzanteil zwischen 0,12 und 0,4 liegt.

4. Sockelkitt nach Anspruch 1, **dadurch gekennzeichnet, daß** die Korngröße des Füllstoffanteils 0,1 µm bis 700 µm beträgt.

5. Sockelkitt nach Anspruch 1, **dadurch gekennzeichnet, daß** der Lösungsmittelanteil aus Ethanol und/oder Iso-Butanol besteht.

## Claims

1. Capping cement for electric lamps, having a synthetic resin content consisting of phenolic resins and/or silicone resins, a natural resin content, a filler content comprising calcite, and a solvent,
in which the synthetic resin content of the capping cement amounts to not more than 11 per cent by weight, and the natural resin content of the capping cement amounts to not more than 5 per cent by weight,
**characterized in that** the filler content consists exclusively of calcite in crystalline form, the average particle size of the filler content being 200 µm and the average density of the filler content being 2.7 g/cm³.

2. Capping cement according to Claim 1, **characterized in that** the weight proportion of natural resin content to synthetic resin content lies between 0.1 and 0.5.

3. Capping cement according to Claim 2, **characterized in that** the weight proportion of natural resin content to synthetic resin content lies between 0.12 and 0.4.

4. Capping cement according to Claim 1, **characterized in that** the particle size of the filler content is from 0.1 µm to 700 µm.

5. Capping cement according to Claim 1, **characterized in that** the solvent content consists of ethanol and/or isobutanol.

## Revendications

1. Mastic de culot pour des lampes électriques, qui comprend une proportion de résine synthétique constituée de résines phénoliques et/ou de résines de silicone, une proportion de résine naturelle et une proportion de charge contenant de la calcite, ainsi qu'une proportion de solvant, la proportion de résine synthétique dans le mastic de culot représentant au plus 11 pour-cent en poids et la proportion de résine naturelle dans le mastic de culot représentant au plus 5 pour-cent en poids,
**caractérisé en ce que** la proportion de charge consiste exclusivement en calcite sous forme cristalline, la granulométrie moyenne de la proportion de charge étant de 200 µm et la masse volumique moyenne de la proportion de charge étant de 2,7 g/cm³.

2. Mastic de culot suivant la revendication 1, **caractérisé en ce que** le rapport en poids de la proportion de résine naturelle à la proportion de résine synthétique est compris entre 0,1 et 0,5.

3. Mastic de culot suivant la revendication 2, **caractérisé en ce que** le rapport en poids de la proportion de résine naturelle à la proportion de résine synthétique est compris entre 0,12 et 0,4.

4. Mastic de culot suivant la revendication 1, **caractérisé en ce que** la granulométrie de la proportion de charge est comprise entre 0,1 µm et 700 µm.

5. Mastic de culot suivant la revendication 1, **caractérisé en ce que** la proportion de solvant est constituée d'éthanol et/ou d'isobutanol.
